(19) Europäisches Patentamt
European Patent Office
Office européen des brevets

(11) Veröffentlichungsnummer : **0 623 704 A1**

(12) # EUROPÄISCHE PATENTANMELDUNG

(21) Anmeldenummer : **94810222.3**

(22) Anmeldetag : **20.04.94**

(51) Int. Cl.[5] : **D21H 21/28,** D21H 19/46, D21H 17/03, C09B 31/08, C09B 31/02

(30) Priorität : **29.04.93 CH 1303/93**

(43) Veröffentlichungstag der Anmeldung : **09.11.94 Patentblatt 94/45**

(84) Benannte Vertragsstaaten : **BE CH DE ES FR GB IT LI**

(71) Anmelder : **CIBA-GEIGY AG**
**Klybeckstrasse 141**
**CH-4002 Basel (CH)**

(72) Erfinder : **Käser, Adolf, Dr.**
**Spitzackerstrasse 118**
**CH-4103 Bottmingen (CH)**

(54) **Verfahren zum Färben von Papier mit Disazofarbstoffen.**

(57) Die Farbstoffe der Formel

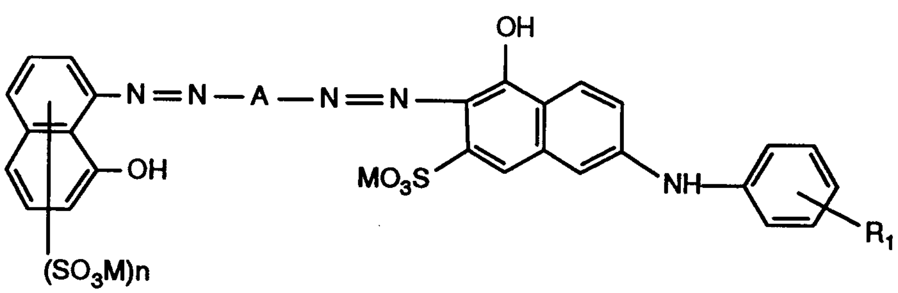

(1)

worin A, $R_1$, M und n die im Anspruch 1 genannten Bedeutungen aufweisen, eignen sich zum Färben von Papier mit guter Lichtechtheit.

EP 0 623 704 A1

Zum Färben von Papier in blauen Farbtönen werden vielfach Disazofarbstoffe verwendet. Falls hohe Lichtechtheiten der Färbungen erwünscht sind, werden in der Praxis fast ausschliesslich Kupferkomplexe von Farbstoffen eingesetzt. Neuerdings sind aus ökonomischen und ökologischen Gründen lichtechte blaue Papierfarbstoffe gesucht, welche keine Kupferkomplexe sind. Die gesuchten Farbstoffe sollen ausserdem einen hohen Ausziehgrad unter den speziellen Färbebedingungen aufweisen, sie sollen Färbungen mit guten Nassechtheiten ergeben und sie sollen so gut löslich sein, dass die Herstellung flüssiger Handelsformen, d.h. konzentrierter Lösungen dieser Farbstoffe, möglich ist. Diese Bedingungen werden von den z.Zt. erhältlichen blauen Papierfarbstoffen noch nicht in allen Belangen erfüllt.

Der vorliegenden Erfindung lag die Aufgabe zugrunde, ein Verfahren zum Färben von Papier in blauen Farbtönen zur Verfügung zu stellen, bei dem die genannten Anforderungen möglichst weitgehend erfüllt sind. Diese Aufgabe wird durch das erfindungsgemässe Verfahren gelöst.

Gegenstand der Erfindung ist ein Verfahren zum Färben von Papier, das dadurch gekennzeichnet ist, dass man einen Farbstoff der Formel

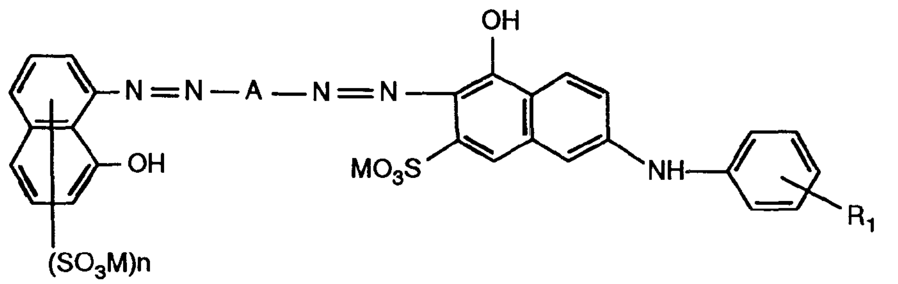
(1)

verwendet, worin

A einen Rest der Formel

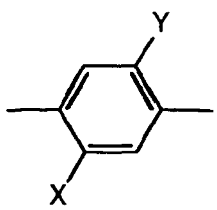
(2) oder

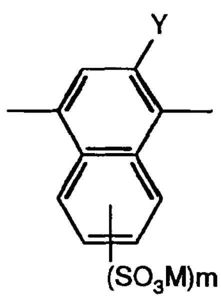
(3),

| | |
|---|---|
| X und Y | unabhängig voneinander Wasserstoff, Alkyl, Alkoxy oder -NH-CO-Z, |
| Z | Wasserstoff, Alkyl, Aryl, Alkoxy, Amino, Mono- oder Dialkylamino oder Arylamino, |
| $R_1$ | Wasserstoff, Alkyl, Alkoxy, Halogen, $SO_3M$ oder Carboxy, |
| M | Wasserstoff oder ein Aequivalent eines farblosen Kations |
| n | 1 oder 2 und |
| m | 0 oder 1 bedeuten. |

Unter Alkylresten sind erfindungsgemäss generell geradkettige, verzweigte oder cyclische Alkylgruppen zu verstehen. Cycloalkyl weist vorzugsweise 5 bis 8 C-Atome, offenkettiges Alkyl vorzugsweise 1 bis 8 C-Atome auf.

Als unverzweigtes oder verzweigtes offenkettiges Alkyl kommen z.B. in Frage: Methyl, Ethyl, n- und iso-Propyl, n-, sec.- oder tert.Butyl, n- und iso-Pentyl, n- und iso-Hexyl oder 2-Ethylhexyl.

Diese Alkylreste können ein- oder mehrmals substituiert sein, beispielsweise durch Hydroxy, Sulfo, Carboxy, $C_1$-$C_4$-Alkoxy, durch Hydroxyl substituiertes $C_1$-$C_4$-Alkoxy, Phenyl, Phenoxy oder Phenylaminocarbonyl, wobei die Phenylgruppe in den drei letztgenannten Resten z.B. durch Sulfo, $C_1$-$C_4$-Alkyl, $C_1$-$C_4$-Alkoxy oder Phenoxy substituiert sein kann. Geeignete Reste dieser Art sind z.B.: Hydroxyethyl, 1-Hydroxy-isopropyl, Ethoxymethyl, 2-Hydroxyethoxypentyl, Benzyl, 1-Phenylethyl, 2-Phenylethyl, 1-Methyl-2-phenylethyl, 1-iso-Butyl-3-phenylpropyl, 1,5-Diphenylpentyl-3,1-Methyl-2-phenoxyethyl oder 1-Methyl-2-phenylaminocarbonylethyl.

Bei Cycloalkyl handelt es sich vor allem um Cyclopentyl und Cyclohexyl; als Substituent kommen vor allem $C_1$-$C_4$-Alkyl, insbesondere $CH_3$, in Frage.

Geeignete Alkoxyreste sind vorzugsweise solche mit 1 bis 4 C-Atomen, z.B. Methoxy, Ethoxy, Propoxy, iso-Propoxy, n-Butoxy, iso-Butoxy oder tert.-Butoxy. Diese Alkoxyreste können substutiert sein, z.B. durch die als Substituenten der Alkylgruppen aufgeführten Reste, insbesondere durch Hydroxy oder $C_1$-$C_4$-Alkoxy. Als substituierte Alkoxyreste kommen z.B. Hydroxyethoxy, Methoxyethoxy, 2-Hydroxypropoxy, 1,2-Dihydroxypropoxy-3 oder 1,2-Dimethoxypropoxy-3 in Frage.

Unter Halogen ist Fluor, Brom Jod oder vor allem Chlor zu verstehen.

Unter Arylresten sind in dieser Anmeldung generell aromatische oder heteroaromatische Reste, insbesondere jedoch Naphthyl- oder vor allem Phenylreste zu verstehen. Alle diese Reste können unsubstituiert oder substituiert sein. Als Substituenten kommen z.B. $C_1$-$C_4$-Alkyl, $C_1$-$C_4$-Alkoxy, Brom, Chlor, Nitro, Cyan, Sulfo, Carboxy oder $C_1$-$C_4$-Alkylcarbonylamino in Betracht. Die besonders bevorzugte Bedeutung von Aryl ist jedoch Phenyl.

M bedeutet Wasserstoff oder ein Aequivalent eines farblosen Kations, beispielsweise Lithium, Natrium, Kalium, Ammonium oder die protonierte Form eines $C_4$-$C_{12}$-Trialkylamins, $C_4$-$C_{12}$-Diamins oder $C_2$-$C_{15}$-Alkanolamins.

Bei M in der Bedeutung eines protonierten $C_4$-$C_{12}$-Trialkylamins kann es sich z.B. um protoniertes N-Ethyldimethylamin, N,N-Diethylmethylamin, Tri-n-propylamin, Tri-n-butylamin, Tri-isobutylamin und insbesondere um Triethylamin oder Tri-isopropylamin handeln; geeignet sind auch Gemische verschiedener protonierter Amine.

Hat M die Bedeutung protoniertes $C_4$-$C_{12}$-Diamin, handelt es sich z.B. um ein Ethylendiamin oder 1,3-Diaminopropan, bei dem eines oder beide N-Atome zusätzlich mit einem oder zwei $C_1$-$C_4$-Alkylresten, vorzugsweise Methyl- oder Ethylresten, substituiert sind. M stellt hierbei bevorzugt ein N,N-Dialkylethylendiamin oder N,N-Dialkyl-1,3-diaminopropan dar. Beispiele sind: N-Ethylethylendiamin, N,N-Dimethylethylendiamin, N,N'-Dimethylethylendiamin, N,N-Diethylethylendiamin, 3-Dimethylamino-1-propylamin oder 3-Diethylamino-1-propylamin.

Steht M für ein protoniertes $C_2$-$C_{15}$-Alkanolamin, so kann es sich z.B. um die protonierte Form eines Monoalkanol-, Dialkanol-, Monoalkanolmonoalkyl-, Monoalkanoldialkyl-, Dialkanolalkyl- oder Trialkanolamins oder um ein Gemisch verschiedener protonierter Alkanolamine handeln. Beispiele sind protoniertes 2-Aminoethanol, Di-(2-hydroxyethyl)-amin, N-(2-Hydroxyethyl)-dimethylamin, N-(2-Hydroxyethyl)-diethylamin, N,N-Di-(2-hydroxyethyl)-methylamin, N,N-Di-(2-hydroxyethyl)-ethylamin oder Tri-(2-hydroxyethyl)-amin, 2-Aminoethoxyethanol oder Diethylaminopropylamin. Es kommen auch protonierte Polyglykolamine in Frage, z.B. Diethanolamin-tris-glykolether.

Vorzugsweise hat M die Bedeutung $Na^{\oplus}$, $Li^{\oplus}$ oder protoniertes $C_4$-$C_6$-Alkanolamin, wobei bei den $C_4$-$C_6$-Alkanolaminen Tri-(2-hydroxyethyl)-amin, Di-(2-hydroxyethyl)-amin oder ein Gemisch dieser beiden Amine bevorzugt ist.

Z ist vorzugsweise $C_1$-$C_4$-Alkyl, gegebenenfalls substituiertes Phenyl, Amino oder gegebenenfalls substituiertes Phenylamino, insbesondere Methyl, Phenyl, Amino oder Phenylamino.

Bevorzugte Bedeutungen von X und Y sind Wasserstoff, Methyl, Methoxy, Acetylamino, Benzoylamino, Ureido oder Phenylureido, vor allem Wasserstoff, Methyl oder Methoxy.

$R_1$ ist vor allem Wasserstoff, Methyl, Methoxy, Chlor, $SO_3M$ oder Carboxy, insbesondere Wasserstoff oder $SO_3M$.

Eine besonders bevorzugte Ausführungsform des erfindungsgemässen Verfahrens besteht darin, dass man einen Farbstoff der Formel

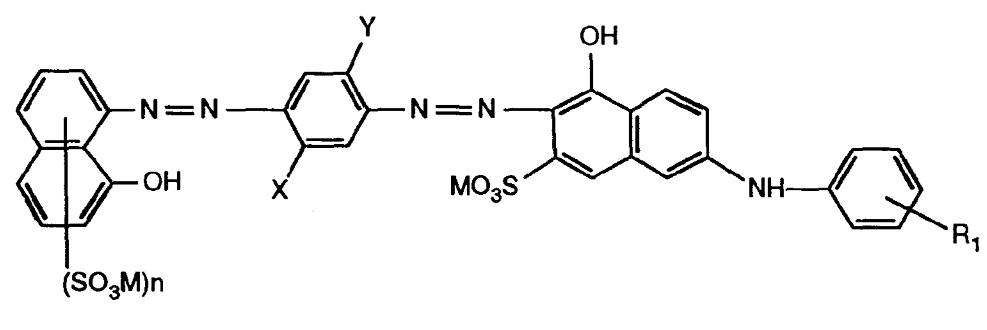

(4)

verwendet, worin

X und Y unabhängig voneinander Wasserstoff, Methyl, Methoxy oder -NH-CO-Z,
Z Methyl, Phenyl, Amino oder Phenylamino,
$R_1$ Wasserstoff, Methyl, Methoxy, Chlor, oder $SO_3M$,
M Wasserstoff oder ein Aequivalent eines farblosen Kations und
n 1 oder 2 bedeuten.

Unter diesen sind die Farbstoffe der Formel

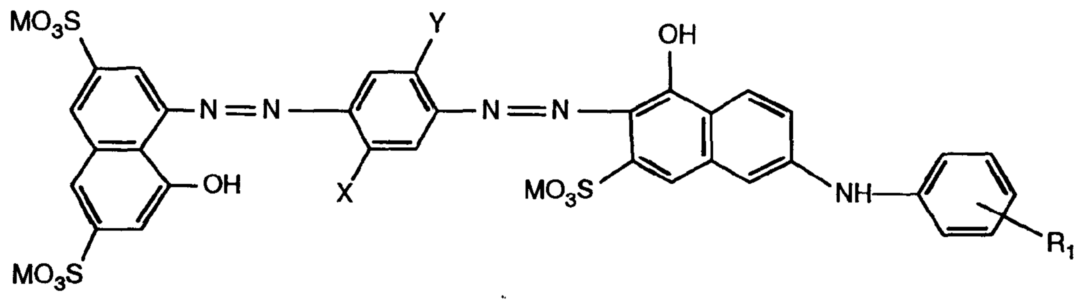

(5),

worin
X und Y unabhängig voneinander Wasserstoff, Methyl oder Methoxy,
$R_1$ Wasserstoff oder $SO_3M$ und
M Wasserstoff oder ein Aequivalent eines farblosen Kations bedeuten,
besonders bevorzugt.

Die im erfindungsgemässen Verfahren zum Färben von Papier verwendeten Farbstoffe der Formel (1) sind bekannt oder können auf an sich bekannte Art und Weise hergestellt werden. Bisher wurden diese Farbstoffe jedoch nur zum Färben von Baumwolle verwendet. Überraschenderweise eignen sie sich besonders gut zum Färben von Papier und zeichnen sich dabei insbesondere durch eine gute Lichtechtheit der erhaltenen Färbungen aus.

In den letzten Jahren hat die Verwendung von konzentrierten wässrigen Lösungen von Farbstoffen an Bedeutung gewonnen, und zwar wegen der Vorteile, die solche Lösungen gegenüber Farbstoffen in Pulverform besitzen. Durch die Verwendung von Lösungen werden die mit der Staubbildung verbundenen Schwierigkeiten vermieden und die Verbraucher von der zeitraubenden und oftmals schwierigen Auflösung des Farbstoffpulvers in Wasser befreit. Die Verwendung von konzentrierten Lösungen wurde ausserdem durch die Entwicklung von kontinuierlichen Färbeverfahren für Papier angeregt, da es bei diesen Verfahren zweckmässig ist, die Lösung direkt in den Holländer oder an irgendeinem anderen geeigneten Punkt der Papierherstellung zuzugeben.

Bei der Verwendung von konzentrierten wässrigen Lösungen anionischer Farbstoffe treten jedoch häufig Schwierigkeiten auf, da solche Lösungen nicht ausreichend lagerstabil sind und bei mehrmonatiger Lagerung, insbesondere bei ca. 0 bis 5°C, Niederschläge auftreten.

Es wurde nun gefunden, dass konzentrierte wässrige Lösungen der erfindungsgemäss verwendeten Farbstoffe sehr gut lagerstabil sind, wenn sie mindestens 0,1 Mol $Li^{\oplus}$ pro Mol Farbstoff der Formel (1) enthalten, wobei sie vorzugsweise einen pH-Wert von mindestens 11 aufweisen.

Ein weiterer Gegenstand der Erfindung sind daher wässrige Lösungen von Farbstoffen, welche dadurch gekennzeichnet sind, dass sie 2 bis 20 Gewichtsprozent eines Farbstoffes der Formel

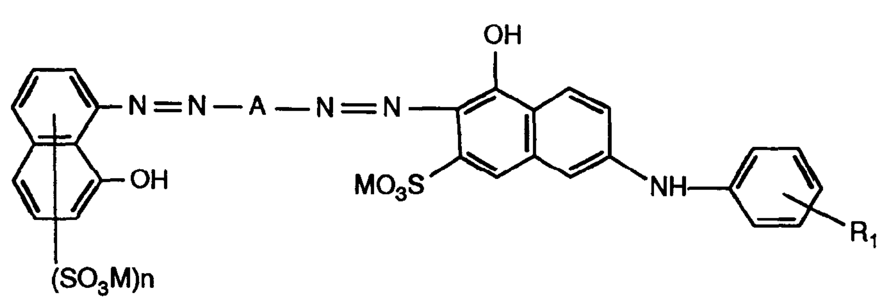

(1)

und mindestens 0,1 Mol $Li^{\oplus}$ pro Mol Farbstoff der Formel (1) enthalten, wobei A, M, $R_1$ und n die weiter oben

unter der Formel (1) angegebenen Bedeutungen besitzen.

Unter diesen sind diejenigen bevorzugt, die einen pH-Wert von mindestens 11, vorzugsweise zwischen 11 und 13, aufweisen.

Bevorzugte wässrige Farbstofflösungen enthalten 6 bis 15 Gewichtsprozent eines Farbstoffes der Formel (1) und 0,1 bis 3 Mol $Li^{\oplus}$ pro Mol Farbstoff der Formel (1) und weisen einen pH-Wert von mindestens 11 auf.

Ausserdem sind solche Farbstofflösungen bevorzugt, welche weniger als 2 Gew. %, bezogen auf das Gewicht der Farbstofflösung, an anorganischen Salzen enthalten. Falls bei der Synthese die Farbstofflösungen mit einem höheren Salzgehalt erhalten werden, so können die Lösungen auf übliche Weise, z.B. durch ein Membrantrennverfahren, entsalzt werden.

Der pH-Wert von mindestens 11 wird in den erfindungsgemässen Farbstofflösungen durch Zusatz einer starken Base, wie z.B. NaOH, KOH, Ammoniak Diethanolamin oder Triethanolamin, vorzugsweise jedoch LiOH, eingestellt.

Zusätzlich können die erfindungsgemässen Farbstofflösungen wasserlösliche organische Lösungsvermittler enthalten, beispielsweise Harnstoff, ε-Caprolactam, Dimethylsulfoxid, N-Methylpyrrolidon, mit Wasser mischbare mehrwertige Alkohole wie Ethylenglykol, Propylenglykol oder Glycerin, Alkanolamine, wie Ethanolamin oder Triethanolamin, oder Polyglykolamine, z.B. Umsetzungsprodukte von Ammoniak, sowie Alkyl- und Hydroxyalkylaminen mit Alkylenoxiden, wie Ethylenoxid, 1,2-Propylenoxid, 1,2-Butylenoxid oder 2,3-Butylenoxid in geeigneten Mengenverhältnissen. Derartige Polyglykolamine sind bekannt, z.B. aus der DE-A-2 061 760.

Die erfindungsgemässen konzentrierten wässrigen Lösungen von Farbstoffen der Formel (1) können z.B. hergestellt werden, indem man die bei der Herstellung des Farbstoffes anfallende Farbstoffsuspension filtriert, gegebenenfalls entsalzt, z.B. durch ein Membrantrennverfahren, und durch Zusatz eines Lithiumsalzes und/oder von Lithiumhydroxid und gegebenenfalls eines Lösungsvermittlers stabilisiert. Man kann aber auch den isolierten Farbstoff in Salzsäure anschlämmen, erneut filtrieren und den Filterkuchen mit Lithiumhydroxid und/oder einem geeigneten Lithiumsalz und der nötigen Menge Wasser vermischen. Schliesslich kann man auch die Kupplung in Gegenwart von LiOH oder Alkanolaminen durchführen und die Syntheselösung anschliessend entsalzen.

Die erfindungsgemässen wässrigen Farbstofflösungen, die bei Lagerungstemperaturen bis zu -5°C stabil sind, eignen sich zum Färben von Papier, auf welchem sie mit oder ohne Verwendung einer Schlichte attraktive blaue Farbtöne mit hoher Lichechtheit ergeben.

Die Farbstofflösungen können nach allen in der Papierindustrie für substantive Farbstoffe gebräuchlichen Verfahren verwendet werden, insbesondere in der Masse- wie in der Oberflächenfärbung von Papier für geleimte und ungeleimte Sorten, ausgehend von gebleichtem oder ungebleichtem Zellstoff verschiedener Provenienz, wie Nadel- oder Laubholz-sulfit- und/oder -sulfat-Zellstoff.

Einen weiteren Gegenstand der vorliegenden Erfindung bilden die Farbstoffe der Formel

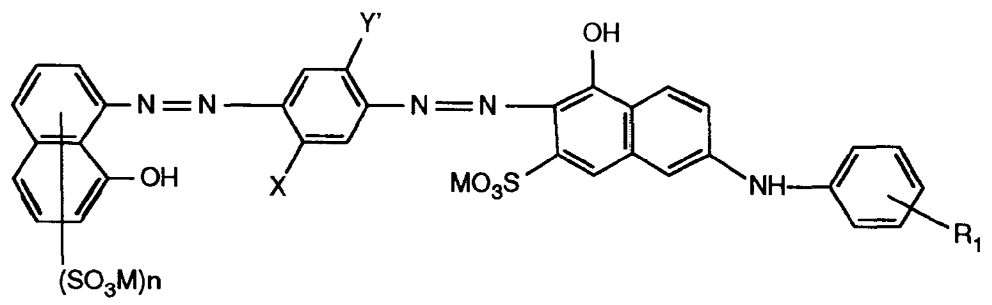

(6),

worin

X Wasserstoff, Alkyl, Alkoxy oder -NH-CO-Z,

Y' einen $C_1$-$C_4$-Alkoxyrest, der durch Hydroxy, $C_1$-$C_4$-Alkoxy, Sulfo, Carboxy, Phenyl, Phenoxy oder Phenylaminocarbonyl substituiert ist,

Z Wasserstoff, Alkyl, Aryl, Alkoxy, Amino, Mono- oder Dialkylamino oder Arylamino,

$R_1$ Wasserstoff, Alkyl, Alkoxy, Halogen, $SO_3M$ oder Carboxy,

M Wasserstoff oder ein Aequivalent eines farblosen Kations

n 1 oder 2 und

m 0 oder 1 bedeuten.

Bevorzugte Bedeutungen von X, Z, $R_1$, M, n und m sind diejenigen, die bei den Farbstoffen der Formel

(1) als bevorzugt angegeben sind, und Y' bedeutet vorzugsweise $C_1$-$C_4$-Alkoxy, welches durch Hydroxy oder Methoxy substituiert ist.

Die neuen Farbstoffe der Formel (6) können auf an sich bekannte Art hergestellt werden, beispielsweise durch Diazotieren einer Aminoazoverbindung der Formel

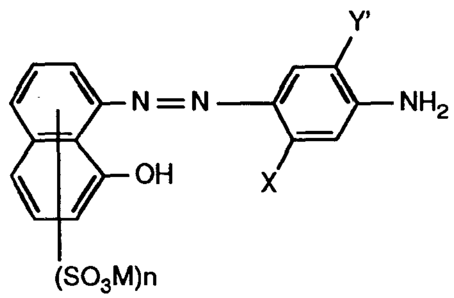
(7)

und Kuppeln mit einer Verbindung der Formel

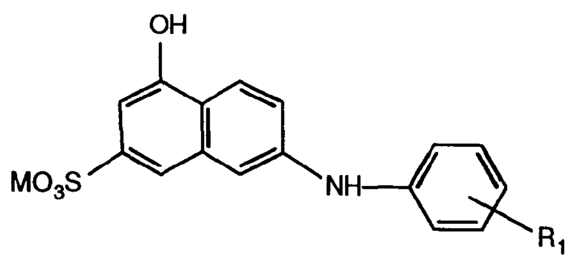
(8).

Bei den Verbindungen der Formeln (7) und (8) weisen X, Y', M, n und $R_1$ die unter der Formel (6) angegebenen Bedeutungen auf.

In den nachfolgenden Beispielen bedeuten die Teile Gewichtsteile, und die Temperaturen sind in Celsiusgraden angegeben.

Beispiel 1:

60,8 g der Verbindung der Formel

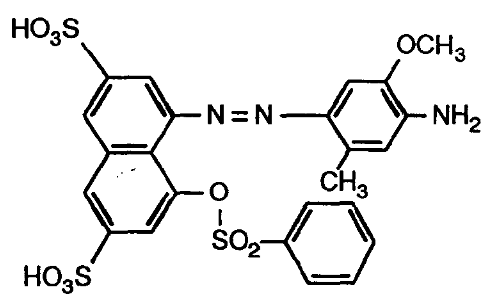

werden mit Natronlauge in 350 ml Wasser zusammen mit 6,9 g Natriumnitrit neutral gelöst und durch Zugabe von 19,2 g 32 %iger Salzsäure bei 20 bis 25° C diazotiert. Die erhaltene Diazosuspension wird innerhalb von 45 Minuten bei 25 bis 30° C zu einer Lösung, hergestellt aus 34,8 g 6-Anilino-1-hydroxynaphthalin-3-sulfonsäure und 22 g Diethanolamin in 250 ml Wasser, getropft; dabei wird der pH-Wert durch Zugabe von 18,0 g Diethanolamin bei 8,5 bis 9,0 gehalten. Nach beendeter Kupplung wird die Synthese-Lösung mit 40 g 50 %iger Natronlauge versetzt und während einer Stunde bei 75° C hydrolysiert. Nach Abkühlen auf Raumtemperatur wird mit 32 %iger Salzsäure auf einen pH-Wert von 6,5 bis 7 eingestellt. Man erhält eine Suspension, enthaltend den Farbstoff der Formel

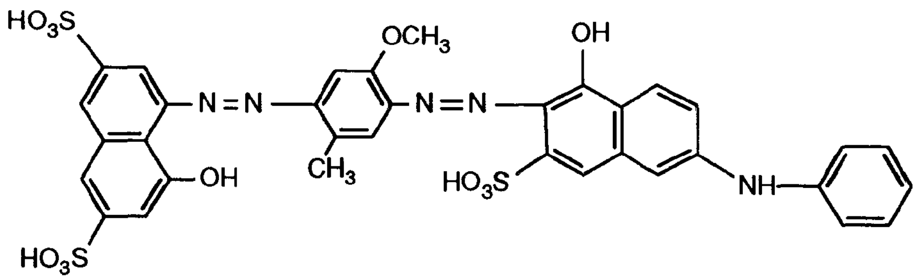

Die Farbstoffsuspension wird durch Umkehrosmose über eine Membran aus chemisch modifiziertem Polyacrylnitril bei 50° C entsalzt und auf ein Endgewicht von 750 g aufkonzentriert.

Man erhält eine bei 2 bis 5° C über mehrere Monate lagerstabile Flüssigformulierung.

Beispiel 2:

Man stellt eine Farbstoffsuspension, enthaltend 85,9 g des Trinatriumsalzes des im Beispiel 1 aufgeführten Farbstoffes, her, indem man wie im Beispiel 1 beschrieben arbeitet, jedoch anstelle von 40 g Diethanolamin 29 g 30 %ige Natronlauge verwendet. Die erhaltene Suspension wird dann durch Umkehrosmose über eine Membran aus chemisch modifiziertem Polyacrylnitril bei 50° C entsalzt und auf ein Endgewicht von 750 g aufkonzentriert. Dann gibt man 3,9 g $LiOH \cdot 1\ H_2O$ und 3,9 g wasserfreies $Li_2SO_4$ zu und rührt die Lösung während einer Stunde bei 50° C. Anschliessend kühlt man auf 25° C ab, füllt mit deionisiertem Wasser auf 780 g auf und filtriert.

Die erhaltene Farbstofflösung ist bei einer Lagertemperatur von 2 bis 5° C über mehrere Monate stabil und färbt Papier in ausgezeichneter Lichtechtheit.

Beispiel 3:

Arbeitet man wie im Beispiel 1 beschrieben, verwendet jedoch nicht 3,9 g $LiOH \cdot 1\ H_2O$ und 3,9 g wasserfreies $Li_2SO_4$, sondern stattdessen 11,7 g wasserfreies $Li_2SO_4$ so erhält man ebenfalls eine lagerstabile Flüssigformulierung.

Beispiel 4:

Arbeitet man wie im Beispiel 1 beschrieben, verwendet jedoch für die Kupplung insgesamt 9,9 g $LiOH \cdot 1\ H_2O$ anstelle von Diethanolamin, so erhält man ebenfalls eine lagerstabile Flüssigformulierung.

Beispiel 5:

In einem Holländer werden 70 Teile chemisch gebleichte Sulfitzellulose (aus Nadelholz) und 30 Teile chemisch gebleichte Sulfitzellulose (aus Birkenholz) in 2000 Teilen Wasser gemahlen. Zu dieser Masse gibt man 2,5 Teile der im Beispiel 1 beschriebenen Farbstofflösung. Nach 20 Minuten Mischzeit wird aus dieser Masse Papier hergestellt. Das auf diese Weise erhaltene saugfähige Papier ist blau gefärbt. Die Färbung weist eine hohe Lichtechtheit auf. Das Abwasser ist praktisch farblos.

Beispiel 6:

3,0 Teile der Farbstofflösung aus Beispiel 1 werden in 100 Teilen Wasser gelöst und die Lösung zu 100 Teilen chemisch gebleichter Sulfitzellulose, die mit 2000 Teilen Wasser in einem Holländer gemahlen wurden, zugesetzt. Nach 15 Minuten Durchmischung wird auf übliche Art mit Harzleim und Aluminiumsulfat geleimt. Papier, das aus diesem Stoff hergestellt wird, besitzt eine blaue Nuance mit guten Nassechtheiten und guter Lichtechtheit.

Beispiele 7-13:

Auf analoge Art wie im Beispiel 1 beschrieben, werden die folgenden Farbstoffe hergestellt, die Papier in blauen Farbtönen mit guten Echtheiten färben.

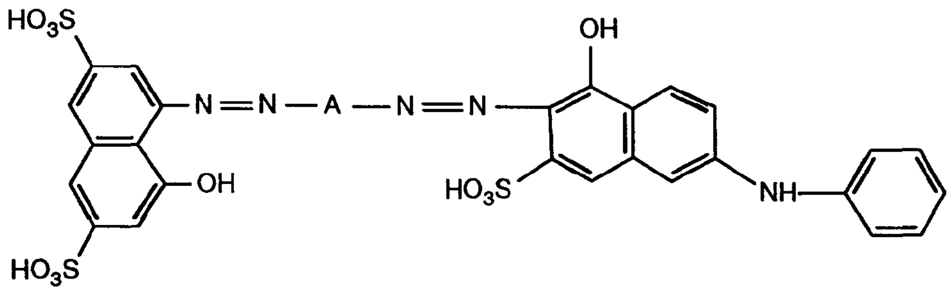

| Beispiel | A |
|---|---|
| 7 | 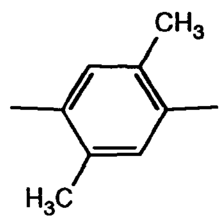 |
| 8 | 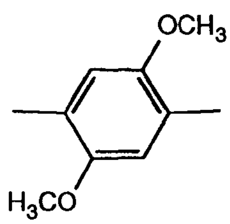 |

9

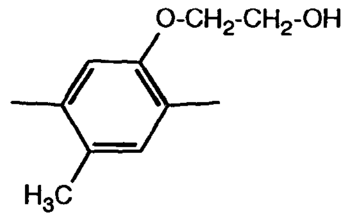

10

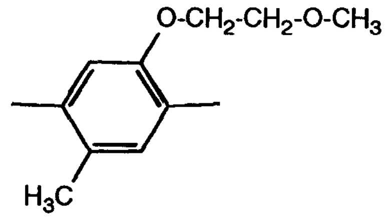

11

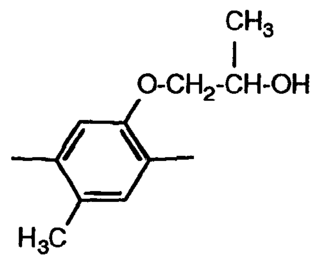

12

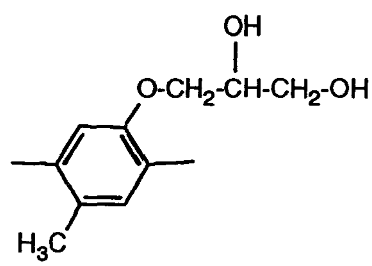

13

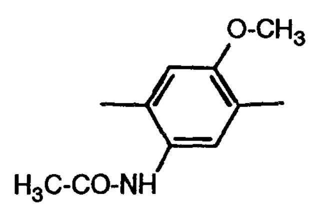

Beispiele 14 - 16:

Auf analoge Art wie im Beispiel 1 beschrieben, werden die folgenden Farbstoffe hergestellt, die Papier in blauen Farbtönen mit guten Echtheiten färben.

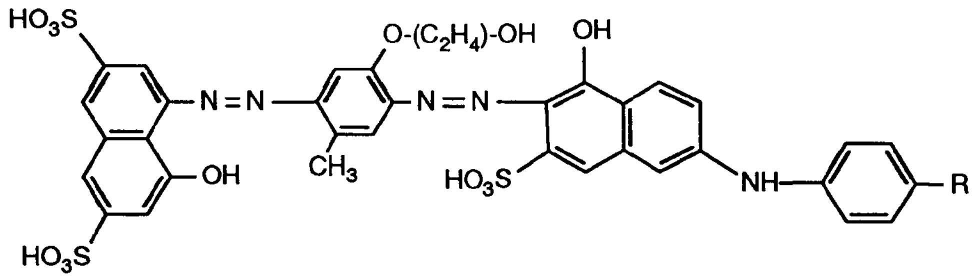

| Beispiel | R |
| --- | --- |
| 14 | $-CH_3$ |
| 15 | $-SO_3H$ |
| 16 | -COOH |

Beispiele 17 - 22:

Auf analoge Art wie im Beispiel 1 beschrieben, werden die folgenden Farbstoffe hergestellt, die Papier in blauen Farbtönen mit guten Echtheiten färben.

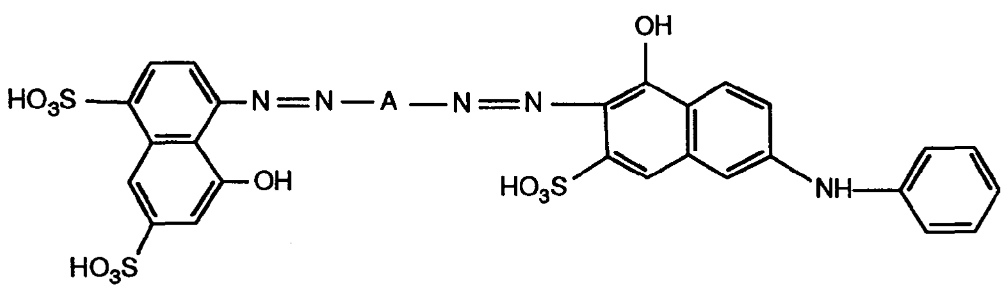

| Beispiel | A |
| --- | --- |
| 17 | 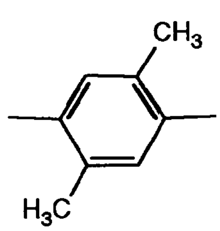 |

18 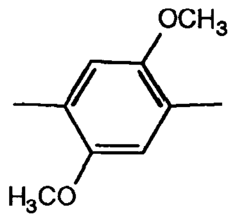

19 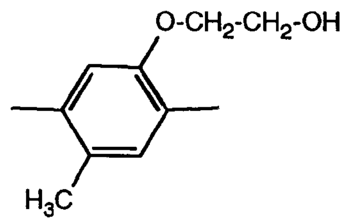

20 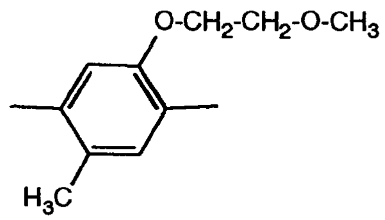

21 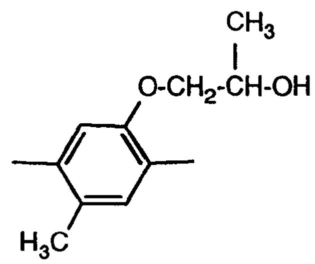

22 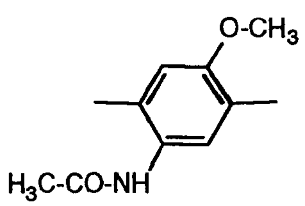

Beispiele 23-25:

Auf analoge Art wie im Beispiel 1 beschrieben, werden die folgenden Farbstoffe hergestellt, die Papier in blauen Farbtönen mit guten Echtheiten färben.

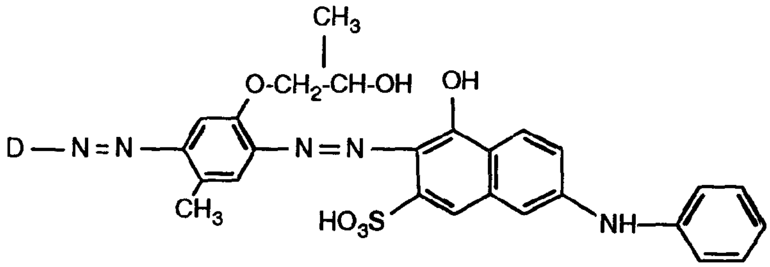

| Beispiel | D |
|---|---|
| 23 | 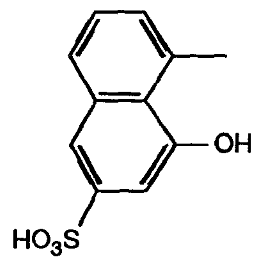 |
| 24 | 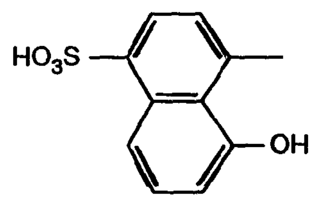 |
| 25 | 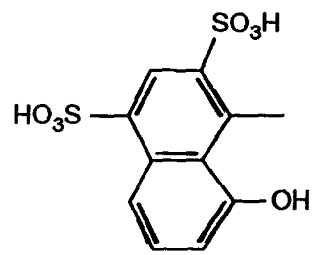 |

**Patentansprüche**

1. Verfahren zum Färben von Papier, dadurch gekennzeichnet, dass man einen Farbstoff der Formel

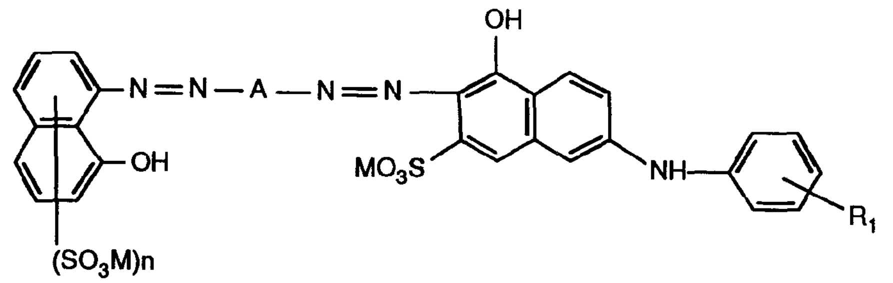

(1)

verwendet, worin

A einen Rest der Formel

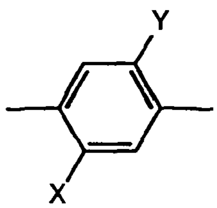

(2) oder

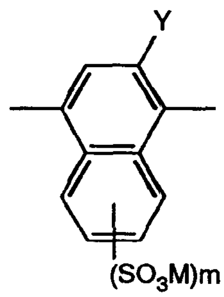

(3),

| | |
|---|---|
| X und Y | unabhängig voneinander Wasserstoff, Alkyl, Alkoxy oder -NH-CO-Z, |
| Z | Wasserstoff, Alkyl, Aryl, Alkoxy, Amino, Mono- oder Dialkylamino oder Arylamino, |
| $R_1$ | Wasserstoff, Alkyl, Alkoxy, Halogen, $SO_3M$ oder Carboxy, |
| M | Wasserstoff oder ein Aequivalent eines farblosen Kations |
| n | 1 oder 2 und |
| m | 0 oder 1 bedeuten. |

**2.** Verfahren gemäss Anspruch 1, dadurch gekennzeichnet, dass man einen Farbstoff der Formel (1) verwendet, worin X und Y unabhängig voneinander Wasserstoff, Methyl, Methoxy, Acetylamino, Benzoylamino, Ureido oder Phenylureido, vor allem Wasserstoff, Methyl oder Methoxy bedeuten.

**3.** Verfahren gemäss einem der Ansprüche 1 oder 2, dadurch gekennzeichnet, dass man einen Farbstoff der Formel (1) verwendet, worin $R_1$ Wasserstoff, Methyl, Methoxy, Chlor, $SO_3M$ oder Carboxy, vor allem Wasserstoff oder $SO_3M$ bedeutet.

**4.** Verfahren gemäss Anspruch 1, dadurch gekennzeichnet, dass man einen Farbstoff der Formel

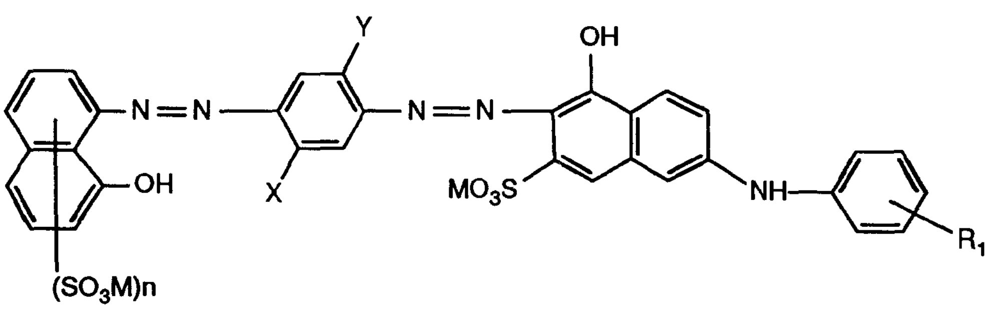

(4)

verwendet, worin

| | |
|---|---|
| X und Y | unabhängig voneinander Wasserstoff, Methyl, Methoxy oder -NH-CO-Z, |
| Z | Methyl, Phenyl, Amino oder Phenylamino, |
| $R_1$ | Wasserstoff, Methyl, Methoxy, Chlor, oder $SO_3M$, |

M Wasserstoff oder ein Aequivalent eines farblosen Kations und
n 1 oder 2 bedeuten.

**5.** Verfahren gemäss Anspruch 1, dadurch gekennzeichnet, dass man einen Farbstoff der Formel

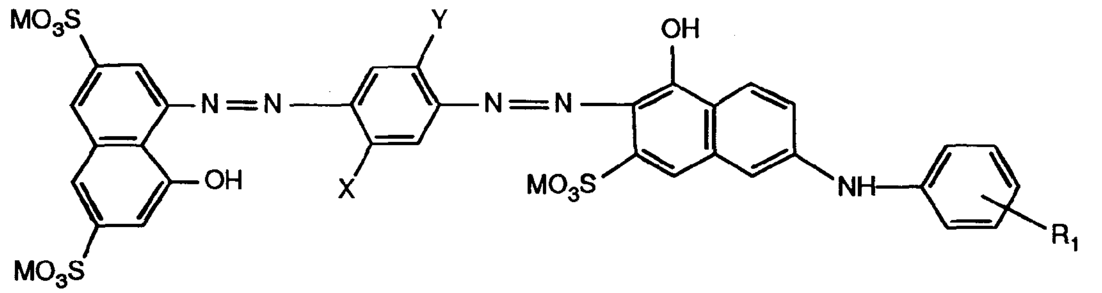

(5),

verwendet, worin

X und Y unabhängig voneinander Wasserstoff, Methyl oder Methoxy,
$R_1$ Wasserstoff oder $SO_3M$ und
M Wasserstoff oder ein Aequivalent eines farblosen Kations bedeuten.

**6.** Verfahren gemäss einem der Ansprüche 1 bis 5, dadurch gekennzeichnet, dass man einen Farbstoff der Formel (1) verwendet, worin M Lithium bedeutet.

**7.** Wässrige Lösungen von Farbstoffen, dadurch gekennzeichnet, dass sie 2 bis 20 Gewichtsprozent eines Farbstoffes der Formel

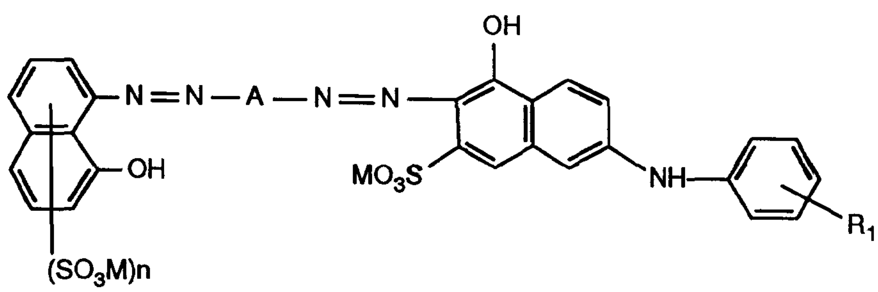

(1)

und mindestens 0,1 Mol $Li^{\oplus}$ pro Mol Farbstoff der Formel (1) enthalten, wobei A, M, $R_1$ und n die im Anspruch 1 unter der Formel (1) angegebenen Bedeutungen besitzen.

**8.** Wässrige Lösungen von Farbstoffen gemäss Anspruch 7, dadurch gekennzeichnet, dass sie einen pH-Wert von mindestens 11, vorzugsweise zwischen 11 und 13, aufweisen,

**9.** Wässrige Lösungen von Farbstoffen gemäss Ansprüchen 7 oder 8, dadurch gekennzeichnet, dass sie 6 bis 15 Gewichtsprozent eines Farbstoffes der Formel (1) und 0,1 bis 3 Mol $Li^{\oplus}$ pro Mol Farbstoff der Formel (1) enthalten und einen pH-Wert von mindestens 11 aufweisen.

**10.** Wässrige Lösungen von Farbstoffen gemäss einem der Ansprüche 7 bis 9, dadurch gekennzeichnet, dass sie weniger als 2 Gew. %, bezogen auf das Gewicht der Farbstofflösung, an anorganischen Salzen enthalten.

**11.** Farbstoffe der Formel

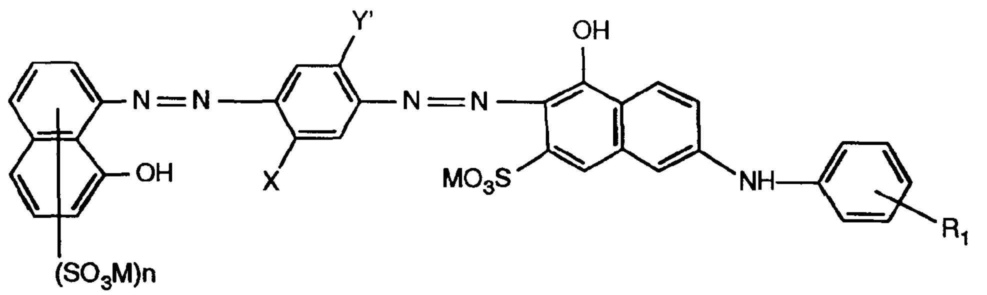

(6),

worin

X Wasserstoff, Alkyl, Alkoxy oder -NH-CO-Z,

Y' einen $C_1$-$C_4$-Alkoxyrest, der durch Hydroxy, $C_1$-$C_4$-Alkoxy, Sulfo, Carboxy, Phenyl, Phenoxy oder Phenylaminocarbonyl substituiert ist,

Z Wasserstoff, Alkyl, Aryl, Alkoxy, Amino, Mono- oder Dialkylamino oder Arylamino,

$R_1$ Wasserstoff, Alkyl, Alkoxy, Halogen, $SO_3M$ oder Carboxy,

M Wasserstoff oder ein Aequivalent eines farblosen Kations,

n 1 oder 2 und

m 0 oder 1 bedeuten.

**12.** Farbstoffe gemäss Anspruch 11, worin

X Wasserstoff, Methyl, Methoxy oder -NH-CO-Z,

Z Methyl, Phenyl, Amino oder Phenylamino,

Y' $C_1$-$C_4$-Alkoxy, welches durch Hydroxy oder Methoxy substituiert ist,

$R_1$ Wasserstoff, Methyl, Methoxy, Chlor, oder $SO_3M$,

M Wasserstoff oder ein Aequivalent eines farblosen Kations und

n 1 oder 2 bedeuten.

Europäisches Patentamt

# EUROPÄISCHER RECHERCHENBERICHT

Nummer der Anmeldung
EP 94 81 0222

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| X | EP-A-0 534 903 (CIBA GEIGY)<br>* Ansprüche 1-14 *<br>----- | 1-11 | D21H21/28<br>D21H19/46<br>D21H17/03<br>C09B31/08<br>C09B31/02 |
| | | | RECHERCHIERTE SACHGEBIETE (Int.Cl.5) |
| | | | D21H<br>C09B |

Der vorliegende Recherchenbericht wurde für alle Patentansprüche erstellt

| Recherchenort | Abschlußdatum der Recherche | Prüfer |
|---|---|---|
| DEN HAAG | 8. Juli 1994 | Fouquier, J-P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)